# EUROPEAN PATENT SPECIFICATION

(11) **EP 3 315 282 B1**
(45) Date of publication and mention of the grant of the patent: **21.04.2021**
(21) Application number: 17199148.2
(22) Date of filing: 30.10.2017
(51) Int. Cl.: C03B 40/00, C03B 23/035, B29C 45/26, B29C 33/10, B29C 33/30, C03B 23/03

(54) **MOLDING DEVICE AND METHOD THEREOF**
GIESSVORRICHTUNG UND VERFAHREN DAFÜR
DISPOSITIF DE MOULAGE ET PROCÉDÉ ASSOCIÉ

(30) Priority: 31.10.2016 TW 105135216
(43) Date of publication of application: 02.05.2018
(73) Proprietor: G-Tech Optoelectronics Corporation, Tongluo Township, Miaoli County (TW)
(72) Inventor: CHANG, Chih-Hao, 401 Taichung City (TW); CHEN, Chih-Te, 408 Taichung City (TW)
(74) Representative: Viering, Jentschura & Partner mbB Patent- und Rechtsanwälte

(56) References cited:
- EP-A1- 2 735 419
- CN-A- 1 775 702
- JP-A- S63 265 608
- US-A- 5 788 903
- US-A1- 2003 075 840
- US-A1- 2004 244 422

## Description

### BACKGROUND

### 1. Technical Field

The present disclosure relates to a molding device and a molding method; in particular, to a molding device and a molding method utilizing a plurality of positioning columns and a plurality of matching columns.

### 2. Description of Related Art

Molding devices made from porous materials have undergone rapid development in recent years. When a molding device is evacuated, negative pressures are formed inside the pores thereof, thereby making the molding materials attach to the formation surface. Therefore, formation can be achieved without compressing the molding materials. However, the quality of the molding products manufactured by the aforementioned molding method is poor.

Therefore, there is still room for improvement in the design of the conventional molding device and the molding system utilizing the same

US 2004/244422 A1 discloses a pressing device comprising a pair of pressing molds having molding surfaces processed to prescribed shape and a means of driving one of the pair of pressing molds at a prescribed rate to press mold a molding material supplied between the pressing molds.

US 2003/075840 A1 discloses an apparatus for molding parts comprising an upper die, a lower die, a vacuum source and a sealing assembly for creating a vacuum chamber surrounding the mold cavity. The alignment of the upper die and lower die is facilitated by pins and stops.

### SUMMARY

The object of the present disclosure is to provide a molding device according to claim 1 and a molding method according to claim 8 to improve the problems associated with the current technology.

In order to achieve the aforementioned object, one technical feature employed by the present disclosure is to provide a molding device including an upper molding assembly and a lower molding assembly. The upper molding assembly includes an upper molding plate and a plurality of positioning columns disposed thereon, wherein at least one mold core and a plurality of matching columns surrounding the at least one mold core are disposed at the same side of the upper molding plate. The lower molding assembly includes a lower molding plate and at least one formation mold, wherein the lower molding plate has at least one accommodating groove, a plurality of matching grooves surrounding the at least one accommodating groove and a plurality of positioning holes surrounding the at least one accommodating groove. In addition, the at least one formation mold is disposed in the at least one accommodating groove, and the at least one formation mold has a formation cavity corresponding to the at least one mold core. Furthermore, each of the plurality of positioning columns is disposed respectively into each of the plurality of positioning holes, and each of the plurality of matching columns is disposed respectively into each of the plurality of matching grooves. Therefore, an article is formed due to the cooperation between the at least one mold core and the at least one formation cavity of the molding device.

In order to achieve the aforementioned object, another technical feature employed by the present disclosure is to provide a molding method, which includes following steps: providing a lower molding assembly including a plurality of positioning holes, a plurality of matching grooves and at least one formation cavity, in which each of the plurality of matching grooves has a plurality of calibration surfaces protruding inward, at least two side walls of the formation cavity respectively have a plurality of supporting surfaces protruding toward the center thereof, and the plurality of supporting surfaces and the plurality of calibration surfaces of the matching groove are at a same vertical height; disposing a molding material on the plurality of supporting surfaces of the at least one formation cavity and disposing a plurality of calibrating glass materials respectively on the plurality of calibration surfaces; providing an upper molding assembly including an upper molding plate and a plurality of positioning holes disposed thereon, wherein at least one mold core and a plurality of matching columns surrounding the at least one mold core are disposed at the same side of the upper molding plate; wherein each of the plurality of positioning holes of the upper molding assembly is disposed correspondingly to each of the plurality of positioning holes, each of the plurality of matching columns is disposed correspondingly to each of the plurality of matching grooves, and the at least one mold core of the upper molding assembly matches the at least one formation cavity of the lower molding assembly; heating the upper molding assembly and the lower molding assembly; evacuating the lower molding assembly through the plurality of positioning holes such that the upper molding assembly gradually moves downward; and compressing the upper molding assembly and the lower molding assembly. Therefore, an article is formed through a cooperation between the at least one mold core and the at least one formation cavity of the molding device.

To sum up, the molding device and the molding method provided by the present disclosure can achieve the advantages by the technical features of "the upper molding assembly includes an upper molding plate and a plurality of positioning columns disposed thereon, wherein at least one mold core and a plurality of matching columns surrounding the at least one mold core are disposed at the same side of the upper molding plate", "the lower molding assembly includes a lower molding plate and at least one formation mold, wherein the lower molding plate has at least one accommodating groove, a plurality of matching grooves surrounding the at least one accommodating groove and a plurality of positioning holes surrounding the at least one accommodating groove, and the at least one formation mold is disposed in the at least one accommodating groove" and "the at least one formation mold has a formation cavity matching the at least one mold core", such that the plurality of positioning columns can be respectively disposed into the plurality of positioning holes, and the plurality of matching columns can be respectively disposed into the plurality of matching grooves. Therefore, an article can be formed by matching the at least one mold core and the formation cavity.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a perspective view showing a molding device according to a first embodiment of the present disclosure.
FIG. 2 is an exploded view showing the molding device according to the first embodiment of the present disclosure.
FIG. 3 is an exploded view from another angle showing the molding device according to the first embodiment of the present disclosure.
FIG. 4 is a sectional view taken along line IV-IV in FIG. 1.
FIG. 5 is an exploded view showing the molding device according to a second embodiment of the present disclosure.
FIG. 6 is an exploded view from another angle showing the molding device according to the second embodiment of the present disclosure.
FIG. 7 is a perspective view showing a lower molding assembly of the molding device according to the second embodiment of the present disclosure.
FIG. 8 is a sectional view taken along line VIII-VIII in FIG. 7.
FIG. 9 is a schematic view showing a molding material disposed on the lower molding assembly of the molding device according to the second embodiment of the present disclosure.
FIG. 10 is a sectional view taken along line X-X in FIG. 9.
FIG. 11 is a perspective view showing an upper molding assembly placed correspondingly above the lower molding assembly of the molding device according to the second embodiment of the present disclosure.
FIG. 12 is a sectional view taken along line XII-XII.
FIG. 13 is a flow diagram showing a molding method according to the second embodiment of the present disclosure.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts. The present disclosure may be implemented or applied by various specific embodiments . The drawings of the present disclosure are simply illustrative and are not depicted in terms of actual dimensions. The following description will further illustrate the related technical contents of the present disclosure, and should not be construed as restricting the technical scope of the present disclosure.

The object of the present disclosure is to provide a molding device and a molding method, and in particular, to a molding device made from heat-resistant porous materials. Evacuation can be performed to provide a negative pressure on molding materials by utilizing the molding device of the present disclosure, so as to allow molding of particular materials such as glass.

### First embodiment

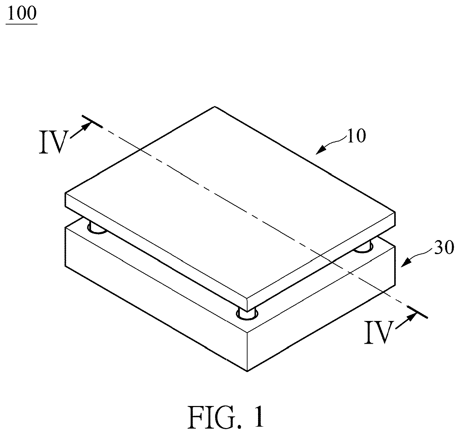

Referring to FIG. 1, the molding device 100 provided by the present disclosure is made of the heat-resistant porous materials. The heat-resistant porous materials can be any one selected from the group consisting of hexagonal crystal lattice carbon (e.g. graphite), hexagonal crystal lattice boron nitride (HBN), silicon dioxide (SiO₂), aluminum oxide (Al₂O₃) and other heat-resistant porous materials. In one embodiment, the molding device 100 is made of graphite.

The molding device 100 includes an upper molding assembly 10 and a lower molding assembly 30, the lower molding assembly 30 complements the upper molding assembly 10.

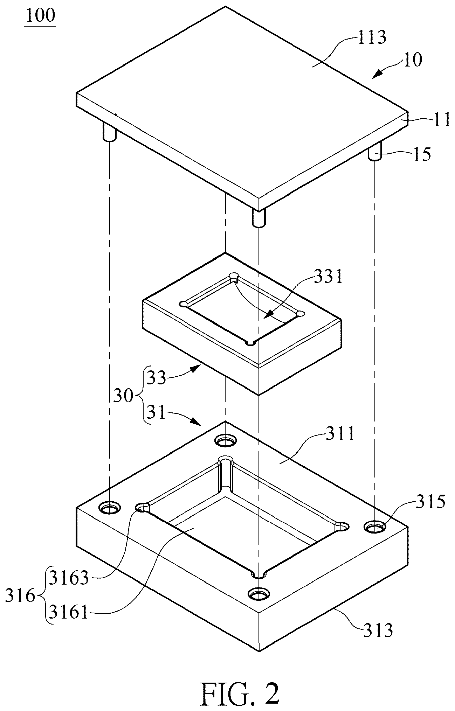

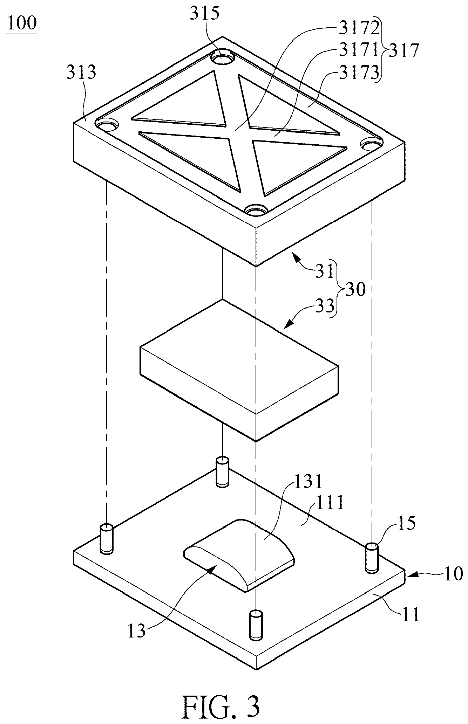

As shown in FIG. 2 and FIG. 3, the upper molding assembly 10 includes an upper molding plate 11, a mold core 13 and a plurality of positioning columns 15 formed on the same surface with the upper molding plate 11.

In the present embodiment, the upper molding plate 11 is a rectangle. Alternatively, the upper molding plate 11 can be circular, polygon or in any shape. The upper molding plate 11 includes a first surface 111 and a second surface 113 opposite to the first surface 111.

The first surface 111 protrudes toward the direction away from the second surface 113 to form the mold core 13. In one embodiment, the mold core 13 is substantially formed at the center of the first surface 111.

In other embodiments, the number and position of the mold core 13 can be adjusted where necessary.

The mold core 13 includes a pressing surface 131 away from the first surface 111.

Each of the plurality of positioning columns 15 is formed by protruding the first surface 111 toward the direction away from the second surface 113.

In one embodiment, the number of the positioning columns 15 is four, and each positioning column is disposed on each rectangular angle of the upper molding plate 11. In one embodiment, the distance from an end of the positioning column 15 away from the first surface 111 to the first surface 111 is larger than the distance from the top of the pressing surface 131 to the first surface 111. In another embodiment, the distance from the end of the positioning column 15 away from the first surface 111 to the first surface 111 is smaller than or equal to the distance from the top of the pressing surface 131 to the first surface 111.

As shown in FIGs. 2-4, the lower molding assembly 30 includes a lower molding plate 31 and a formation mold 33 accommodated in the lower molding plate 31.

The lower molding plate 31 includes an upper surface 311 and a lower surface 313 disposed opposite thereto. The lower molding plate 31 has a plurality of positioning holes 315 corresponding to the plurality of positioning columns. The positioning holes 315 pass through the upper surface 311 and the lower surface 313, and the positioning holes 315 complement the positioning columns 15.

In one embodiment, the lower molding plate 31 is in a rectangular shape. The number of the plurality of positioning holes 315 is four, and each one of the positioning holes 315 is disposed on four corners of the lower molding plate 31, respectively. In other embodiments, the shape of the lower molding plate 31 may be varied according to practical needs.

The upper surface 311 of the lower molding plate 31 dents toward the lower surface 313 to form an accommodating groove 316. The center of the accommodating groove 316 corresponds to the center of the mold core 13. In the embodiment, the accommodating groove 316 includes a main part 3161 in a substantial rectangle and four extending parts 3163. The four extending parts 3163 are formed by extending the four angles thereof along the corresponding diagonal directions away from the center of the main part 3161.

Alternatively, the main part 3161 can be varied according to practical needs, such as circular, polygon, etc. The extending part 3163 is formed by extending the inside wall of the main part 3161 toward the directions away from the center of the main part 3161. The number of the extending part 3163 can be varied according to practical needs.

Referring to FIG. 3, the lower surface 313 of the lower molding plate 31 dents toward the upper surface 311 to form an air-venting groove 317. The air-venting groove 317 connects to the four positioning holes 315.

In the present embodiment, the air-venting groove 317 includes four first portions 3171, each first portion 3171 having one end connected to the positioning hole 315, and the other ends away from the positioning holes 315 of the plurality of first portions 3171 connected to each other at an intersection 3172, the length of each first portion 3171 being equal to each other.

In the embodiment, the air-venting groove 317 further includes a second portion 3173 that connects the four positioning holes 315 to substantially form a rectangle.

The formation mold 33 is accommodated in the main part 3161 of the accommodating groove 316 and complements the main part 3161, so as to position the formation mold 33 on the lower molding plate 31. Furthermore, the extending parts 3163 helps placement and removal of the formation mold 33.

In the present embodiment, the formation mold 33 is substantially rectangular. The formation mold 33 dents toward the direction away from the bottom surface of the accommodating groove 316 to form a formation cavity 331, and the formation cavity 331 complements the mold core 13. The formation cavity 331 includes a formation surface 3311 adjacent to the bottom surface of the accommodating groove 316, and the formation surface 3311 complements the pressing surface 131.

During operation, the molding device 100 is positioned on a working bench (not shown), the working bench is equipped with a vacuum device (not shown), and the air-venting groove 317 is connected to the vacuum device. The vacuum device is turned on for evacuating air. Since the molding device 100 is made of heat-resistant porous materials, the formation cavity 331 produces a negative pressure during evacuation because of the porous structures of the molding device 100, such that a molding material accommodated in the formation cavity 331 is tightly attached to the formation surface 3311. In addition, after the vacuum device is turned on to perform evacuation, negative pressures are generated in the air-venting groove 317 and the plurality of positioning holes 315 connected thereto, such that the positioning columns 15 slides along the positioning holes 315 and the upper molding assembly 10 presses downwardly until the mold core 13 complements the formation cavity 331. Therefore, the molding materials can be formed by compressing the pressing surface 131 and the formation surface 3311. In order to improve the formation of the molding materials, the nozzles of the vacuum device are disposed corresponding to the intersection 3172, such that both the negative pressure generated in the positioning holes 315 and the moving velocity of the upper molding assembly 10 can remain constant.

### Second embodiment

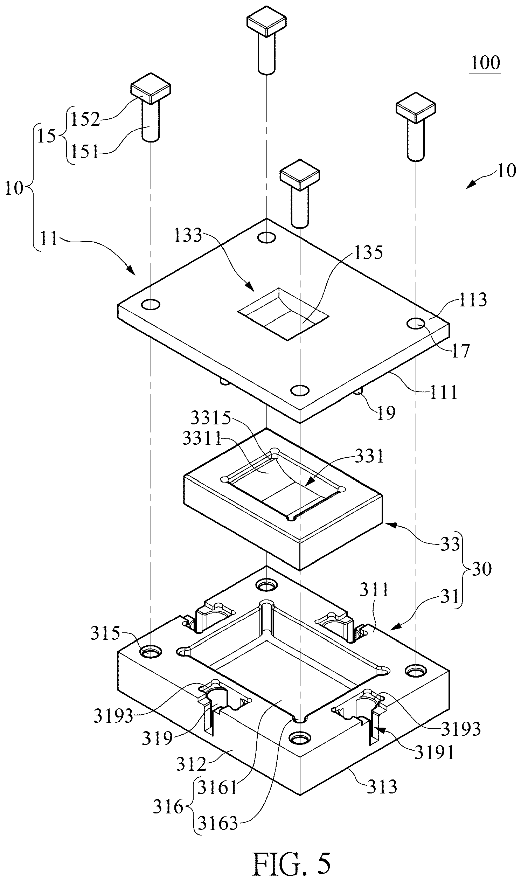

FIGs. 5-13 show diagrams of the molding device 100 and the flow diagram of the molding method by utilizing the molding device 100 according to the second embodiment of the present disclosure.

The molding device 100 provided by the present disclosure is made of the heat-resistant porous materials. The heat-resistant porous materials can be one selected from the group consisting of hexagonal crystal lattice boron nitride, silicon dioxide (SiO₂), aluminum oxide (Al₂O₃), hexagonal crystal lattice carbon, and any combination thereof. More specifically, the density D of the heat-resistant porous materials is about 1.5 g/cm³ ≦ D ≦ 6.5 g/cm³. In addition, the heat-resistant porous materials has the characteristic of being able to remain in consistent shapes under temperatures of larger than or equal to 0°C and smaller than or equal to 1600°C . In addition, a great number of pores that are evenly distributed and in spatial communication with each other are formed inside of the heat-resistant porous materials. The diameter d of each of the pores is 2 µm ≦ d ≦ 0.2 nm. The molding device 100 of the present embodiment is made of graphite.

The main difference between the molding device 100 of the second embodiment and that of the first embodiment is that the molding device 100 of the present embodiment has a plurality of matching columns 19 that can be used to calibrate the pressure level, and a plurality of matching grooves 319 corresponding to the plurality of matching columns 19.

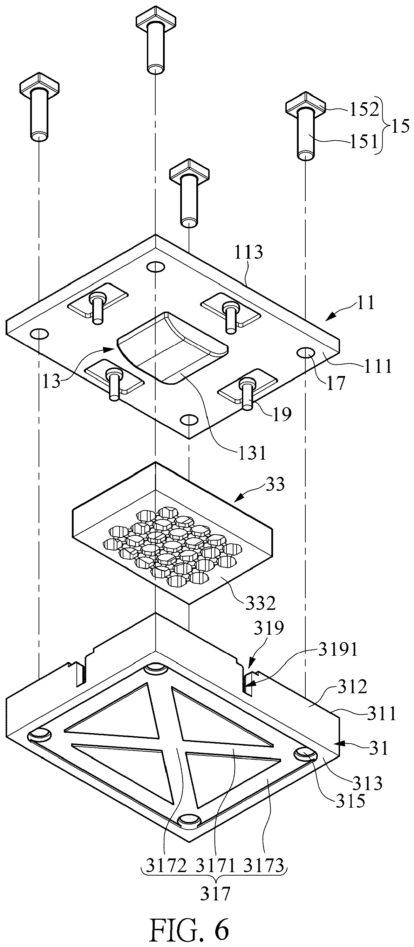

As shown in FIGs. 5 and 6, the molding device 100 according to the second embodiment includes an upper molding assembly 10 and a lower molding assembly 30.

First of all, the upper molding assembly 10 includes an upper molding plate 11 and a plurality of positioning columns 15. In the present embodiment, the upper molding plate 11 is a rectangular upper molding plate 11, however, the present disclosure is not limited thereto. The upper molding plate 11 can be polygonal, circular or any other desired shapes. The upper molding plate 11 has a first surface 111 and a second surface 113 opposite to the first surface 111. At least one mold core 13 is disposed on the first surface 111 of the upper molding plate 11, and protrudes from the first surface 111 in a direction away from the second surface 113. The number and the position of the mold core 13 can be adjusted where necessary. In the present embodiment, the number of the mold core 13 is one, and the mold core 13 is substantially formed at the center of the rectangular upper molding plate 11. In other embodiments, the number of the mold core 13 can be two, three, four or five. The mold core 13 is mainly used for pressing the molding material. The mold core 13 has a first predetermined forming surface for attaching the molding material. In the present embodiment, as shown in FIG. 6, the first predetermined forming surface is the pressing surface 131, where the mold core 13 protrudes away from the first surface 111. In addition, the pressing surface 131 is substantially a curved surface.

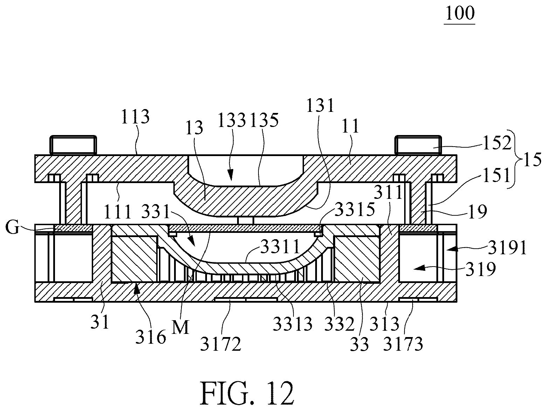

It should be noted that the mold core 13 of the present embodiment has a recessed region 133 formed by recessing the second surface 113 of the upper molding plate 11 toward the first surface 111. The recessed surface 135 in the recessed region 133 of the second surface 113 is disposed correspondingly to the first predetermined forming surface, i.e. the pressing surface 131, of the mold core 13. Referring to FIG. 12, the sectional view shows the recessed surface 135 in the recessed region 133 and the pressing surface 131 corresponding thereof of the mold core 13 of the upper molding assembly 10. In addition, the thickness of the upper molding plate 11 in the recessed region 133 is substantially the same as that of the flat, remaining parts of the upper molding plate 11.

Furthermore, the upper molding plate 11 has a plurality of through holes 17 that pass through the first surface 111 and the second surface 113. The plurality of through holes 17 of the present disclosure are disposed on the upper molding plate 11, and the position and numbers thereof can be adjusted in accordance with practical needs. According to the present embodiment, the number of the plurality of through holes 17 is four, and each of the plurality of through holes 17 is respectively disposed at four corners of the rectangular upper molding plate 11 of the present disclosure.

The disposition of the plurality of positioning columns 15 on the upper molding plate 11 in the present embodiment is different from that in the first embodiment. The plurality of positioning columns 15 are designed as several separate columns, the number of which corresponds to that of the plurality of through holes 13, rather than protruding from the upper molding plate 11. In the present embodiment, each of the plurality of positioning columns 15 has a column body 151 and a blocker 152, and the number of the positioning columns 15 is four. In other words, the plurality of positioning columns 15 pass through the plurality of through holes 17, such that each column body 151 is exposed on the same side on which the mold core 13 is disposed, i.e. the first surface 111 of the upper molding plate 11, and each blocker 152 of the plurality of positioning columns 15 is at the side opposite to which the column bodies 151 are exposed, i.e. at the second surface 113, so as to restrict the extension of the plurality of positioning columns 15.

In addition, the upper molding assembly 10 of the present disclosure further includes a plurality of matching columns 19. The plurality of matching columns 19 are substantially disposed around the mold core 13. The number and position of the plurality of matching columns 19 can be adjusted in accordance with the practical needs. In the present embodiment, the number of the plurality of matching columns 19 is four, and each matching column 19 is respectively disposed at the middle of each peripheral side of the rectangular upper molding plate 11. The plurality of matching columns 19 are disposed on the first surface 111 of the upper molding plate 11, and are formed by protruding from the first surface 111 toward the direction away from the second surface 113. Generally, the at least one mold core 13, the column bodies 151 of the plurality of positioning columns 15 and the plurality of matching columns 19 of the present embodiment are all disposed at the same side of the upper molding plate 11.

It should be noted that when the plurality of positioning columns 15 are disposed on the upper molding plate 11, the length from the end of the column body 151 of the plurality of positioning columns 15 to the first surface 111 of the upper molding plate 11 is greater than the greatest thickness from the pressing surface 131 of the mold core 13 to the first surface 111. Meanwhile, the length from the end of the matching column 19 to the first surface 111 can be equal to or greater than the greatest thickness from the pressing surface 131 of the mold core 13 to the first surface 111.

As mentioned above, the lower molding assembly 30 of the present embodiment includes a lower molding plate 31 and at least one formation mold 33. Referring to FIG. 5, the lower molding plate 31 has an upper surface 311 and a lower surface 313 opposite to the upper surface 311. The lower molding plate 31 has at least one accommodating groove 316 formed by denting the upper surface 311 toward the lower surface 313. The accommodating groove 316 is used to accommodate the at least one formation mold 33. The number and the position of the accommodating groove 316 can be adjusted according to practical needs. In the present embodiment, the number of the accommodating groove 316 is one, and the accommodating groove is substantially formed at the middle of the lower molding plate 31 and disposed correspondingly to the mold core 13 of the upper molding accommodating assembly 10. In addition, the lower molding plate 31 further includes a plurality of positioning holes 315 disposed around the accommodating groove 316 and a plurality of matching grooves 319 disposed around the accommodating groove 316 as well. Meanwhile, the number and the position of the plurality of matching grooves 319 can be adjusted according to practical needs. In the present embodiment, the number of the matching grooves 319 is four, and each of the matching grooves 319 is individually formed at the middle of each peripheral side of the lower molding plate 31 and disposed correspondingly to each of the plurality of matching columns 19 of the upper molding plate 11.

More specifically, as shown in FIGs. 5 and 6, the accommodating groove 316 includes a main part 3161 and four extending parts 3163. The main part 3161 and the extending part 3163 of the present embodiment are substantially the same as those in the first embodiment, in which the four extending parts 3163 are formed by extending the four angles thereof along the corresponding diagonal directions away from the center of the main part 3161. Alternatively, the shape of the main part 3161 can be varied according to practical needs, such as circular, polygon, etc. The extending part 3163 is formed by extending the inside wall of the main part 3161 toward the directions away from the center of the main part 3161. The number of the extending part 3163 can be varied according to practical needs.

Furthermore, the plurality of positioning holes 315 are disposed around the accommodating groove 316 and correspond to both the plurality of through holes 17 and the plurality of positioning columns 15. In the present embodiment, the number of the plurality of positioning holes 315 is four, and are disposed near each corner of the lower molding plate 31, respectively. The plurality of positioning holes 315 pass through the upper surface 311 and the lower surface 313 of the lower molding plate 31. Hence, the plurality of positioning columns 15 can be placed into the plurality of positioning holes 315 when the upper molding assembly 10 matches the lower molding assembly 30. In other words, each of the plurality of positioning holes 315 respectively accommodate each of the plurality of positioning columns 15, such that the plurality of positioning columns 15 complement the plurality of positioning holes 315.

In addition, the plurality of matching grooves 319 are formed by recessing the upper surface 311 of the lower molding plate 31 in a direction toward the lower surface 313 thereof and by grooving on a side surface 312 of the lower molding plate 31. As shown in FIG. 5, the number of the plurality of matching grooves 319 is four, and each is formed by recessing the upper surface 311 of the lower molding plate 31 downward. It should be noted that the matching grooves 319 do not pass through the lower surface 313 of the lower molding plate 31, so as to accommodate the plurality of matching column 19 during the compression of the upper molding assembly 10 and the lower molding assembly 30. At the same time, in order to monitor the position of the matching column 19, a slit 3191 is formed by opening the matching groove 319 toward the side surface 312 so as to observe the relative position when the matching column 19 moves down. In addition, each of the plurality of matching grooves 319 respectively have a plurality of calibration surfaces 3193 to be used for calibrating the horizontal level during the formation. For example, each of the plurality of matching grooves 319 of the present embodiment has two calibration surfaces opposite each other to allow the calibrating glass materials to be placed thereon.

Then, the lower surface 313 of the lower molding plate 31 has an air-venting groove 317 recessing toward the direction to the upper surface 311, and the air-venting groove 317 is connected to the said four positioning holes 315 (as shown in FIG. 6). The configuration of all elements included in the air-venting groove 317 of the present embodiment are the same as those of the air-venting groove 317 in the first embodiment, and thus details of the same elements will be omitted from the following descriptions.

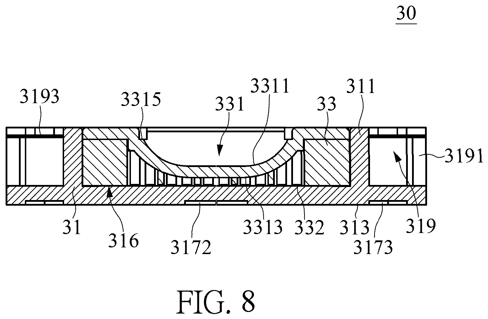

Referring to FIG. 5, the at least one formation mold 33 of the present embodiment is disposed in the accommodating groove 316 of the lower molding plate 31 and has a formation cavity 331 corresponding to the at least one mold core 13. In detail, the formation mold 33 is accommodated in a main part 3161 of the accommodating groove 316, and the shape of the formation mold 33 substantially corresponds to that of the main part 3161. The number of the at least one formation mold 33 can be adjusted according to practical needs. In the present embodiment, the number of the at least one formation mold 33, which corresponds to that of the mold core 13, is one. The formation mold 33 has a formation cavity 331 formed by recessing the upper surface 311 of the lower molding plate 31 towards the accommodating groove 316. The concaved shape of the formation cavity 331 substantially corresponds to the protruding shapes of the mold core 13. A second predetermined forming surface is formed at the concaved region of the formation mold 33 to be press-fitted for contacting with the molding material to be molded. In accordance with the present embodiment, the second predetermined forming surface is a formation surface 3311, and the shape of the formation surface 3311 complements that of the pressing surface 131. Referring to FIG. 8, the formation mold 33 has a convex surface 3313 protruding from the back of the formation surface 3311 and formed correspondingly to the second predetermined forming surface. The thickness from anywhere of the formation surface 3311 to the convex surface 3313 of the whole formation mold 33 is substantially the same. More specifically, as shown in FIG. 6 and FIG. 8, the formation mold 33 has a bottom surface 332 formed with multiple pores having a predetermined shape thereon. The multiple pores with the predetermined shape pass through the bottom surface 332 of the formation mold 33, so as to expose part of the convex surface 3313. In the present embodiment, the predetermined shape is, but not limited to being, hexagonal.

Moreover, the difference between the formation cavity 331 of the present embodiment and that of the first embodiment is that, at least two side walls of the formation cavity 331 of the present embodiment respectively have supporting surfaces 3315 formed by protruding toward the center of the formation cavity 331. According to the present embodiment, the plurality of supporting surfaces 3315 are two supporting surfaces 3315 disposed at two opposite sides of the rectangular formation cavity 331. The plurality of supporting surfaces 3315 of the formation cavity 331 and the plurality of calibration surfaces 3193 of the plurality of matching grooves 319 are at a same vertical height, as illustrated in FIG. 8. Accordingly, the supporting surfaces 3315 can not only support the molding material M, but also cooperate with the calibration surfaces 3193 of the matching grooves 319 to calibrate the placement of the molding materials M.

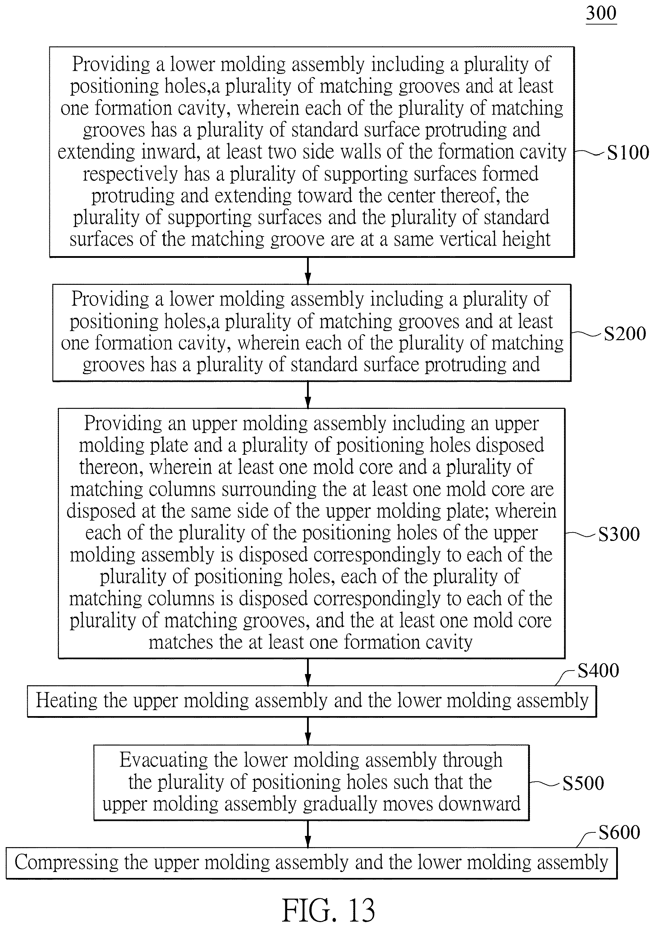

The molding method 300 performed by utilizing the molding device 100 of the present disclosure is described with reference to FIG. 13 and FIGs. 7-12. The molding method 300 according to the present embodiment includes the following steps:

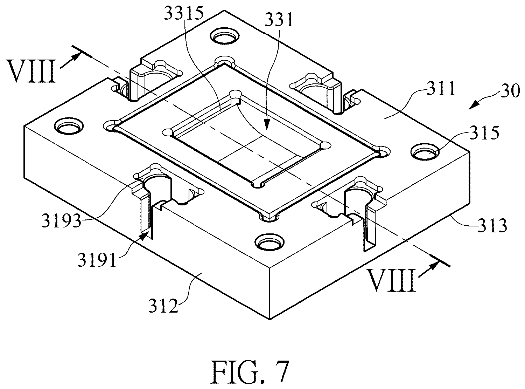

Step S100: providing a lower molding assembly 30, the lower molding assembly 30 including a plurality of positioning holes 315, a plurality of matching grooves 319 and at least one formation cavity 331. Each of the plurality of matching grooves 319 has a plurality of calibration surface 3193 protruding inward, the at least two side walls of the formation cavity 331 respectively have a plurality of supporting surfaces 3315 formed protruding toward the center thereof, and the plurality of supporting surfaces 3315 and the plurality of calibration surfaces 3193 of the matching groove 319 are at a same vertical height (as shown in FIGs. 7-8).

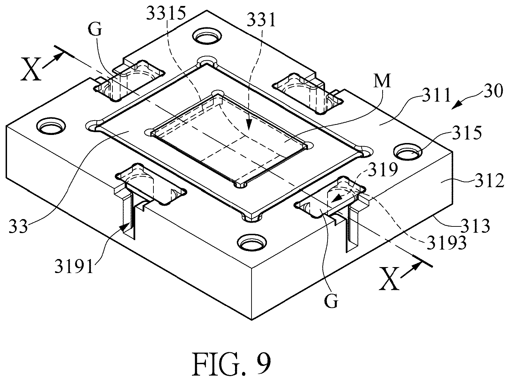

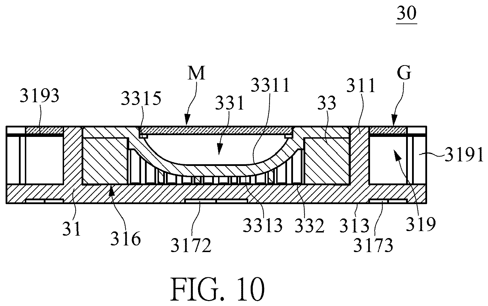

Step S200: disposing a molding material M on the plurality of supporting surfaces 3315 of the at least one formation cavity 331 and disposing a plurality of calibrating glass materials respectively on the plurality of calibration surfaces 3193 as illustrated in FIG. 9 and FIG. 10.

It should be noted that the calibrating glass material can be a common glass material, and preferably can be the same as the material of the molding material M, or be different. The molding material M can be a flat, transparent glass material, which is a glass material well known in the art. In the present embodiment, the glass materials are four glass sheets G that fit the shape of the matching grooves 319 and that are able to be supported by the calibration surfaces 3315. The molding material M can include, but is not limited to, soda-lime glass, silicate glass, borosilicate glass, lead-based glass or quartz glass, etc. Since the plurality of supporting surfaces 3315 and the plurality of calibration surfaces 3193 are at a same vertical height, the surface of the glass sheets G and that of the molding material M being with the same thickness will be at the same vertical height after being disposed thereon.

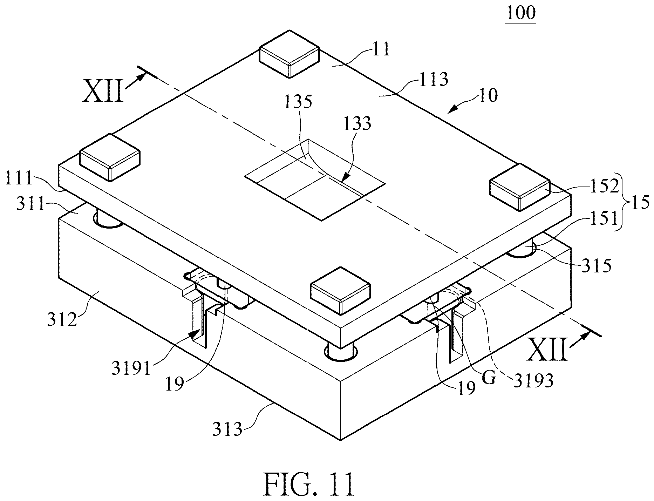

Step S300: providing an upper molding assembly 10, the upper molding assembly 10 including an upper molding plate 11 and a plurality of positioning columns 15 disposed thereon. At least one mold core 13 and a plurality of matching columns 19 surrounding the at least one mold core 13 are disposed at the same side of the upper molding plate 11. During step S300, each of the plurality of positioning columns 15 respectively corresponds to each of the positioning holes 315, each of the plurality of matching columns 19 respectively corresponds to each of the plurality of matching grooves 319, and the at least one mold core 13 corresponds to the at least one formation cavity 331 (as shown in FIG. 11 and FIG. 12).

The plurality of positioning columns 15 are detachably disposed in the plurality of through holes 17 of the upper molding plate 11. The main advantages of the aforementioned design is that, a movable allowance among the positioning columns and the through holes 17 can be maintained, such that the accuracy of vertical placement for the positioning columns 15 into the positioning holes 315 can be ensured by fine-tuning during the compression between the upper molding assembly 10 and the lower molding assembly 30. Hence, the upper molding assembly 10 can be calibrated to be level during compression so as to provide a uniform strength.

Step S400: heating the upper molding assembly 10 and the lower molding assembly 30.

For this heating step, the plurality of positioning columns 15 and the plurality of matching columns 19 of the upper molding assembly 10 are heated simultaneously. The upper molding assembly 10 can be further heated to the softening point of the glass materials. Generally, the softening points of the molding material M and the glass sheets G are not lower than 600 °C.

Step S500: evacuating the lower molding assembly 30 through the plurality of positioning holes 315 such that the upper molding assembly 10 gradually moves downward.

After heating, the molding material and glass materials start softening and the evacuating step is applied on the lower molding assembly 30 concurrently by external suction devices. The molding device 100 is evacuated through the positioning holes 315 that pass through the upper surface 311 and the lower surface 313 of the lower molding assembly 30, such that the porous structure in the molding device 100 is a vacuum. Since the positioning holes 315 are connected to the air-venting grooves 317 of the lower surface 313 of the lower molding plate 31, the air can be sucked out uniformly from the underneath of the lower molding assembly 30. Meanwhile, since the molding device 100 is made of heat-resistant porous materials, a negative pressure is generated in the formation cavity 331 through the porous structure of the molding device 100 during the evacuating process, such that the softened molding material M placed on the supporting surfaces 3315 is pulled down, thereby being attached to the second predetermined forming surface of the formation cavity 331. In the present embodiment, the second predetermined forming surface is the formation surface 3311. By continuously evacuating the lower molding assembly 30 through the positioning holes 315 and the air-venting groove 317, the negative pressure is produced inside the lower molding assembly 30, such that the positioning columns 15 of the upper molding assembly 10 slide along the positioning holes 315 after fitting thereinto, and the upper molding assembly 10 is pressed downwardly until the first predetermined forming surface of the mold core 13 attaches to the molding material M.

It is worth noting that, in the present embodiment, the upper molding assembly 10 further includes a plurality of matching columns 19, and each of the plurality of matching columns 19 respectively corresponds to each of the plurality of matching grooves 319 of the lower molding assembly 30. Similarly, the negative pressure is continuously produced in the upper molding assembly 10 by evacuation through the positioning holes 315 of the lower molding assembly 30. After the heated glass sheets G for calibration achieve the softening points thereof due to its porous characteristic, the plurality of matching columns 19 move downwardly along with the continuous compression of the upper molding assembly 10 until the ends of the matching columns 19 touch the glass sheets G on the calibration surfaces 3193 of the matching grooves 319 for calibration. Since the number of the plurality of matching columns 19 is four, and each matching column 19 is respectively disposed at the middle of each peripheral side of the rectangular molding device 100, it can be determined whether the upper molding assembly 10 is slanted or not by the time each matching column 19 respectively contacts each glass sheet G. Furthermore, since the length of the positioning columns 15 is substantially longer than those of the matching columns 19, the positioning columns 15 slide into the positioning holes 315 before the positioning columns 19 contact the glass sheets G on the matching grooves 319. The length of the matching columns 19 can be greater than the thickness from the pressing surface 131 of the mold core 13 to the first surface 111 of the upper molding plate 11, such that the time point when the end of the matching columns 19 touch the glass sheets G will be earlier than the time point when the pressing surface 131 of the mold core 13 touches the molding material M. Hence, by the design of the matching columns 19 and the matching grooves 319 of the present embodiment, the molding device 100 can compress vertically and uniformly during the compression process, thereby preventing any slanting.

Step S600: compressing the upper molding assembly 10 and the lower molding assembly 30.

As stated above, by evacuating the mold device 100 to generate a negative pressure in the lower molding assembly 30, the upper molding assembly 10 gradually moves downward to complement the lower molding assembly 30. An article is formed of the molding material M by cooperation of the mold core 13 and the formation cavity 331. The first predetermined forming surface of the mold core 13 attaches to one surface of the molding material M, the second predetermined forming surface of the formation cavity 331 attaches to one opposite surface of the molding material M. The molding material M is molded by the compression between the upper molding assembly 10 and the lower molding assembly 30, then cooled and cured to complete the formation of the article. The two opposite surfaces of the article formed by the aforementioned method have the same profiles as the first predetermined forming surface and the second predetermined forming surface, respectively. In the present embodiment, the first predetermined forming surface of the mold core 13 is the pressing surface 131; the second predetermined forming surface of the formation cavity 331 is the formation surface 3311, and the two opposite surfaces of the article respectively correspond to the profiles of the pressing surface 131 and the formation surface 3311, resulting in a glass article with curved surfaces.

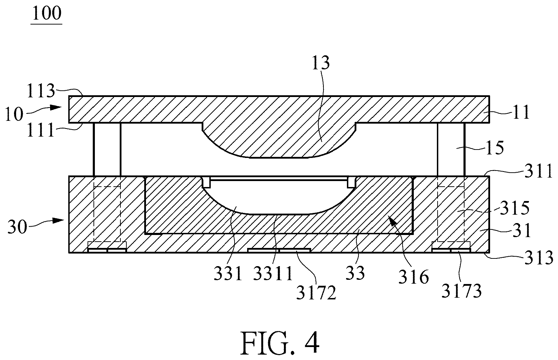

Furthermore, the upper molding plate 11 has the recessed region 133 corresponding to the mold core 13, and the thickness of the upper molding plate 11 in the recessed region 133 is substantially the same as that of the remaining parts of the upper molding plate 11. In other words, compared to the upper molding plate 11 of the first embodiment (FIG. 4), the thickness of the upper molding plate 11 corresponding to the mold core 13 (the recessed region 133) of the present embodiment is obviously smaller than that of the upper molding plate 11 corresponding to the mold core 13 in the first embodiment. This design is advantageous in that it is beneficial for the subsequent cooling step of the heated molding material M. That is, the smaller thickness of the upper molding plate 11 corresponding to the mold core 13 region is beneficial for uniform heat dissipation during cooling, and therefore improves the cooling and curing efficiency for the molding material M.

Similarly, the bottom of the formation mold 33 has a convex surface 3313 corresponding to the formation cavity 331, and the thickness from any point on the formation surface 3311 of the formation cavity 331 to the corresponding convex surface 3313 is substantially the same. This feature is also beneficial for heat dissipation during cooling and for the complete attachment between the formation surface 3311 of the formation cavity 331 and the molding material M, i.e. the smaller thickness of the upper molding plate 11 corresponding to the mold core 13allows for effective cooling and uniform heat dissipation .

In summary, the molding device 100 of the present embodiment, which is made of heat-resistant porous materials (e.g., graphite), can have a negative pressure generated in the upper molding assembly 10 and the lower molding assembly 30 of the molding device 100 due to its own porous structure during the evacuation processes of the molding device 100. Meanwhile, the upper molding plate 11 corresponding to the mold core 13 has a substantially consistent thickness, and the formation mold 33 corresponding to the formation cavity 331 has a substantially consistent thickness as well, so as to improve the evacuating uniformity applied to the molding device 100 by the external vacuum device and to generate a uniform negative pressure. Hence, the molding material M can be tightly attached to the pressing surface 131 and the formation surface 3311. In addition, the upper molding assembly 10 according to the present embodiment includes the plurality of detachable positioning columns 15 disposed in the plurality of through holes 17 of the upper molding plate 11, so as to maintain a movable allowance for the positioning columns 15 aligning and sliding into the positioning holes 315. Hence, the degree of levelness of the upper molding assembly 10 can be immediately fine-tuned to ensure that the downward movement across the entire upper molding assembly 10 is at the same speed, and to increase the yield. Similarly, the upper molding assembly 10 has the plurality of matching columns 19, and the lower molding assembly 30 has the plurality of matching grooves 319 that correspond in shape to the plurality of matching columns 19. The matching grooves 319 have a plurality of calibration surfaces 3193 of which the vertical height is the same as that of the supporting surface 3315 of the formation cavity 331, and the length of the matching grooves 319 can be larger than or equal to the greatest thickness from the pressing surface 131 of the mold core 13 to the first surface 111 of the upper molding plate 11. The design of the slit 3191 facilitates the removal of the calibrating glass sheets G after compression and can be used for observing the inserted positions of the matching columns 319. Hence, the timing of compression of the upper molding assembly 10 can be controlled, so as to reduce the occurrence of slanting during the compressing process, and to increase the yield rate.

To sum up, the molding device 100 and the molding method 300 provided by the present disclosure can achieve the advantages by the technical features of "the upper molding assembly 10 includes an upper molding plate 11 and a plurality of positioning columns 15 disposed thereon, wherein at least one mold core 13 and a plurality of matching columns 19 surrounding the at least one mold core 13 are disposed at the same side of the upper molding plate 11", "the lower molding assembly 30 includes a lower molding plate 31 and at least one formation mold 33, wherein the lower molding plate 31 has at least one accommodating groove 316, a plurality of matching grooves 319 surrounding the at least one accommodating groove 316 and a plurality of positioning holes 315 surrounding the at least one accommodating groove 316, and the at least one formation mold 33 is disposed in the at least one accommodating groove 316" and "the at least one formation mold 33 has a formation cavity 331 matching the at least one mold core 13", such that the plurality of positioning columns 15 can be respectively disposed into the plurality of positioning holes 315, and the plurality of matching columns 19 can be respectively disposed into the plurality of matching grooves 319. Therefore, an article can be formed by matching the at least one mold core 13 and the formation cavity 331.

The descriptions illustrated *supra* set forth simply the preferred embodiments of the present disclosure; however, the characteristics of the present disclosure are by no means restricted thereto. All changes, alterations, or modifications conveniently considered by those skilled in the art are deemed to be encompassed within the scope of the present invention delineated by the following claims.

## Claims

1. A molding device (100), comprising:
an upper molding assembly (10), including an upper molding plate (11) and a plurality of positioning columns (15) detachably disposed on the upper molding plate (11), wherein the upper molding plate (11) has a plurality of through holes (17) respectively passed through by the plurality of positioning columns (15), at least one mold core (13) and a plurality of matching columns (19) surrounding the at least one mold core (13) are disposed at the same side of the upper molding plate (11); and
a lower molding assembly (30), including a lower molding plate (31) and at least one formation mold (33), wherein the lower molding plate (31) has at least one accommodating groove (316), a plurality of matching grooves (319) surrounding the at least one accommodating groove (316) and a plurality of positioning holes (315) surrounding the at least one accommodating groove (316); the at least one formation mold (33) is disposed in the at least one accommodating groove (316), and the at least one formation mold (33) has a formation cavity (331) corresponding to the at least one mold core (13);
wherein each of the plurality of positioning columns (15) is disposed respectively into each of the plurality of positioning holes (315), and each of the plurality of matching columns (19) is disposed respectively into each of the plurality of matching grooves (319);
wherein an article is formed by matching the at least one mold core (13) and the formation cavity (331).

2. The molding device (100) according to claim 1, wherein the at least one mold core (13) has a first predetermined forming surface, the at least one formation cavity (331) has a second predetermined forming surface, and the two opposite surfaces of the article have the same profiles as the first predetermined forming surface and the second predetermined forming surface, respectively.

3. The molding device (100) according to claim 2, wherein the at least one mold core (13) has a recessed region (133) that opposite to the first predetermined forming surface and formed by recessing corresponding thereto, and the thickness of the upper molding plate (11) in the recessed region (133) is the same as that of the rest part of the upper molding plate (11).

4. The molding device (100) according to claim 2, wherein the at least one molding device (100) has a convex surface (3313) protruding formed opposite to the second predetermined forming surface and corresponding thereto.

5. The molding device (100) according to claim 1, wherein the lower molding plate (31) includes an upper surface (311) and a lower surface (313) opposite to the upper surface (311); and the plurality of positioning holes (315) pass through the upper surface (311) and the lower surface (313).

6. The molding device (100) according to claim 5, wherein the plurality of matching grooves (319) are formed by recessing the upper surface of the lower molding plate (31) toward the direction of the lower surface (313) of the lower molding plate (31), and by grooving a side surface (312) of the lower molding plate (31), and each of the plurality of matching grooves (319) has a plurality of calibration surface (3193) protruding inward.

7. The molding device (100) according to claim 6, wherein at least two side walls of the formation cavity (331) respectively have a plurality of supporting surfaces (3315) protruding toward the center thereof, and the plurality of supporting surfaces (3315) and the plurality of calibration surfaces (3193) of the plurality of matching grooves (319) are at a same vertical height.

8. A molding method (300), comprising:
providing a lower molding assembly (30) including a plurality of positioning holes (315), a plurality of matching grooves (319) and at least one formation cavity (331), wherein each of the plurality of matching grooves (319) has a plurality of calibration surfaces (3193) protruding inward, at least two side walls of the formation cavity (331) respectively have a plurality of supporting surfaces (3315) protruding toward the center thereof, the plurality of supporting surfaces (3315) and the plurality of calibration surfaces (3193) of the matching groove (319) are at a same vertical height;
disposing a molding material (M) on the plurality of supporting surfaces (3315) of the at least one formation cavity (331) and disposing a plurality of calibrating glass materials respectively on the plurality of calibration surfaces (3193);
providing an upper molding assembly (10) including an upper molding plate (11) and a plurality of positioning columns (15) disposed thereon, wherein at least one mold core (13) and a plurality of matching columns (19) surrounding the at least one mold core (13) are disposed at the same side of the upper molding plate (11); wherein each of the plurality of positioning columns (15) of the upper molding assembly (10) is disposed correspondingly to each of the plurality of positioning holes (315), each of the plurality of matching columns (19) is disposed correspondingly to each of the plurality of matching grooves (319), and the at least one mold core (13) of the upper molding assembly (10) matches the at least one formation cavity (331) of the lower molding assembly (30);
heating the upper molding assembly (10) and the lower molding assembly (30);
evacuating the lower molding assembly (30) through the plurality of positioning holes (315) such that the upper molding assembly (10) gradually moves downward;
compressing the upper molding assembly (10) and the lower molding assembly (30);
wherein an article is formed by matching the at least one mold core (13) and the formation cavity (331).

9. The molding method according to claim 8, wherein the at least one mold core (13) has a first predetermined forming surface, the at least one formation cavity (331) has a second predetermined forming surface, and the two opposite surfaces of the article have the same profiles as the first predetermined forming surface and the second predetermined forming surface, respectively.

## Patentansprüche

1. Formgebungsvorrichtung (100), aufweisend:
eine obere Formgebungseinrichtung (10), welche eine obere Formgebungsplatte (11) und eine Vielzahl von Positionierungssäulen (15) aufweist, welche abnehmbar an der oberen Formgebungsplatte (11) angeordnet sind, wobei die obere Formgebungsplatte (11) eine Vielzahl von Durchgangslöchern (17) hat, durch welche die Vielzahl von Positionierungssäulen (15) hindurchgehen, wobei mindestens ein Formgebungskern (13) und eine Vielzahl von passenden Säulen (19), welche den mindestens einen Formgebungskern (13) umgeben, an derselben Seite der oberen Formgebungsplatte (11) angeordnet sind, und
eine untere Formgebungseinrichtung (30), welche eine untere Formgebungsplatte (31) und mindestens eine Herstellungsform (33) aufweist, wobei die untere Formgebungsplatte (31) mindestens eine Aufnahmenut (316), eine Vielzahl von passenden Nuten (319), welche die mindestens eine Aufnahmenut (316) umgeben, und eine Vielzahl von Positionierungslöchern (315) hat, welche die mindestens eine Aufnahmenut (316) umgeben, wobei die mindestens eine Herstellungsform (33) in der mindestens einen Aufnahmenut (316) angeordnet ist, und die mindestens eine Herstellungsform (33) eine Herstellungsaussparung (331) hat, welche mit dem mindestens einen Formgebungskern (13) korrespondiert,
wobei die jeweilige Vielzahl von Positionierungssäulen (15) in der jeweiligen Vielzahl von Positionierungslöchern (315) angeordnet ist, und die jeweilige Vielzahl von passenden Säulen (19) in der jeweiligen Vielzahl von Aufnahmenuten (319) angeordnet ist,
wobei ein Gegenstand gebildet wird mittels Zusammenbringens des mindestens einen Formgebungskerns (13) und der Herstellungsaussparung (331).

2. Formgebungsvorrichtung (100) gemäß Anspruch 1, wobei der mindestens eine Formgebungskern (13) eine erste vorbestimmte Formgebungsfläche hat, wobei die mindestens eine Herstellungsaussparung (331) eine zweite vorbestimmte Formgebungsfläche hat, und wobei die beiden entgegengesetzten Flächen des Gegenstandes die gleichen Profile wie die erste vorbestimmte Formgebungsfläche bzw. die zweite vorbestimmte Formgebungsfläche haben.

3. Formgebungsvorrichtung (100) gemäß Anspruch 2, wobei der mindestens eine Formgebungskern (13) einen vertieften Bereich (133) hat, welcher entgegengesetzt zu der ersten vorbestimmten Formgebungsfläche ist und mittels korrespondierenden Aussparens davon gebildet ist, und wobei die Dicke der oberen Formgebungsplatte (11) in dem vertieften Bereich (133) die gleiche ist wie die des restlichen Teils der oberen Formgebungsplatte (11).

4. Formgebungsvorrichtung (100) gemäß Anspruch 2, wobei die mindestens eine Formgebungsvorrichtung (100) eine konvexe Fläche (3313) hat, welche entgegengesetzt zu der zweiten vorbestimmten Formgebungsfläche hervorstehend gebildet ist und damit korrespondiert.

5. Formgebungsvorrichtung (100) gemäß Anspruch 1, wobei die untere Formgebungsplatte (31) eine obere Fläche (311) und eine untere Fläche (313) aufweist, welche entgegengesetzt zu der oberen Fläche (311) ist, und wobei die Vielzahl von Positionierungslöchern (315) durch die obere Fläche (311) und die untere Fläche (313) hindurchgehen.

6. Formgebungsvorrichtung (100) gemäß Anspruch 5, wobei die Vielzahl von passenden Nuten (319) gebildet sind: mittels Aussparens der oberen Fläche der unteren Formgebungsplatte (31) in Richtung zu der Richtung der unteren Fläche (313) der unteren Formgebungsplatte (31), und mittels Nutens einer Seitenfläche (312) der unteren Formgebungsplatte (31), und wobei jede von der Vielzahl von passenden Nuten (319) eine Vielzahl von Kalibrierflächen (3193) hat, welche nach innen vorstehen.

7. Formgebungsvorrichtung (100) gemäß Anspruch 6, wobei mindestens zwei Seitenwände der Herstellungsaussparung (331) jeweils eine Vielzahl von Auflageflächen (3315) haben, welche in Richtung zu der Mitte davon hervorstehen, und wobei sich die Vielzahl von Auflageflächen (3315) und die Vielzahl von Kalibrierflächen (3193) von der Vielzahl von passenden Nuten (319) auf einer gleichen vertikalen Höhe befinden.

8. Formgebungsverfahren (300), aufweisend:
Bereitstellen einer unteren Formgebungseinrichtung (30), welche eine Vielzahl von Positionierungslöchern (315), eine Vielzahl von passenden Nuten (319) und mindestens eine Herstellungsaussparung (331) hat, wobei jede von der Vielzahl von passenden Nuten (319) eine Vielzahl von Kalibrierflächen (3193) hat, welche nach innen vorstehen, wobei mindestens zwei Seitenwände der Herstellungsaussparung (331) eine Vielzahl von Auflageflächen (3315) haben, welche in Richtung zu der Mitte davon hervorstehen, wobei sich die Vielzahl von Auflageflächen (3315) und die Vielzahl von Kalibrierflächen (3193) von der passenden Nut (319) auf einer gleichen vertikalen Höhe befinden,
Anordnen eines Formgebung-Materials (M) an den mehreren Auflageflächen (3315) der mindestens einen Herstellungsaussparung (331) und Anordnen einer Vielzahl von Kalibrierung-Glas-Materialien an der Vielzahl von Kalibrierflächen (3193),
Bereitstellen einer oberen Formgebungseinrichtung (10), welche eine obere Formgebungsplatte (11) und eine Vielzahl von Positionierungssäulen (15) aufweist, welche darauf angeordnet sind, wobei mindestens ein Formgebungskern (13) und eine Vielzahl von passende Säulen (19), welche den mindestens einen Formgebungskern (13) umgeben, an derselben Seite der oberen Formgebungsplatte (11) angeordnet sind, wobei jede von der Vielzahl von Positionierungssäulen (15) der oberen Formgebungseinrichtung (10) korrespondierend mit jedem von der Vielzahl von Positionierungslöchern (315) angeordnet ist, jede von der Vielzahl von passenden Säulen (19) korrespondierend mit jeder von der Vielzahl von passenden Nuten (319) angeordnet ist und der mindestens eine Formgebungskern (13) der oberen Formgebungseinrichtung (10) zu der mindestens einen Herstellungsaussparung (331) der unteren Formgebungseinrichtung (30) passt,
Erwärmen der oberen Formgebungseinrichtung (10) und der unteren Formgebungseinrichtung (30),
Evakuieren der unteren Formgebungseinrichtung (30) durch die Vielzahl von Positionierungslöcher (315) derart, dass sich die obere Formgebungseinrichtung (10) sukzessive nach unten bewegt,
Zusammendrücken der oberen Formgebungseinrichtung (10) und der unteren Formgebungseinrichtung (30),
wobei ein Gegenstand gebildet wird mittels Zusammenbringens des mindestens einen Formgebungskerns (13) und der Herstellungsaussparung (331).

9. Formgebungsverfahren gemäß Anspruch 8, wobei der mindestens eine Formgebungskern (13) eine erste vorbestimmte Formgebungsfläche hat, wobei die mindestens eine Herstellungsaussparung (331) eine zweite vorbestimmte Formgebungsfläche hat, und wobei die beiden entgegengesetzten Flächen des Gegenstands die gleichen Profile wie die erste vorbestimmte Formgebungsfläche bzw. die zweite vorbestimmte Formgebungsfläche haben.

## Revendications

1. Dispositif de moulage (100), comprenant :
un ensemble de moulage supérieur (10), incluant une plaque de moulage supérieure (11) et une pluralité de colonnes de positionnement (15) disposées de manière détachable sur la plaque de moulage supérieure (11), dans lequel la plaque de moulage supérieure (11) présente une pluralité de trous traversants (17) respectivement traversés par la pluralité de colonnes de positionnement (15), au moins un noyau de moule (13) et une pluralité de colonnes (19) correspondantes entourant l'au moins un noyau de moule (13) sont disposés du même côté de la plaque de moulage supérieure (11) ; et
un ensemble de moulage inférieur (30), incluant une plaque de moulage inférieure (31) et au moins un moule de formation (33), dans lequel la plaque de moulage inférieure (31) présente au moins une rainure de réception (316), une pluralité de rainures (319) correspondantes entourant l'au moins une rainure de réception (316) et une pluralité de trous de positionnement (315) entourant l'au moins une rainure de réception (316) ; l'au moins un moule de formation (33) est disposé dans l'au moins une rainure de réception (316), et l'au moins un moule de formation (33) présente une cavité de formation (331) correspondant à l'au moins un noyau de moule (13) ;
dans lequel chacune de la pluralité de colonnes de positionnement (15) est disposée respectivement dans chacun de la pluralité de trous de positionnement (315), et chacune de la pluralité de colonnes (19) correspondantes est disposée respectivement dans chacune de la pluralité de rainures (319) correspondantes ;
dans lequel un article est formé en faisant correspondre l'au moins un noyau de moule (13) et la cavité de formation (331).

2. Dispositif de moulage (100) selon la revendication 1, dans lequel l'au moins un noyau de moule (13) présente une première surface de formation prédéterminée, l'au moins une cavité de formation (331) présente une seconde cavité de formation prédéterminée, et les deux surfaces opposées de l'article présentent les mêmes profils que la première surface de formation prédéterminée et la seconde surface de formation prédéterminée, respectivement.

3. Dispositif de moulage (100) selon la revendication 2, dans lequel l'au moins un noyau de moule (13) présente une région évidée (133) qui est opposée à la première surface de formation prédéterminée et formée par un évidement correspondant à celle-ci, et l'épaisseur de la plaque de moulage supérieure (11) dans la région évidée (133) est la même que celle de la partie restante de la plaque de moulage supérieure (11).

4. Dispositif de moulage (100) selon la revendication 2, dans lequel l'au moins un dispositif de moulage (100) présente une surface convexe (3313) faisant saillie formée opposée à la seconde surface de formation prédéterminée et correspondant à celle-ci.

5. Dispositif de moulage (100) selon la revendication 1, dans lequel la plaque de moulage inférieure (31) inclut une surface supérieure (311) et une surface inférieure (313) opposée à la surface supérieure (311) ; et la pluralité de trous de positionnement (315) traversent la surface supérieure (311) et la surface inférieure (313).

6. Dispositif de moulage (100) selon la revendication 5, dans lequel la pluralité de rainures (319) correspondantes sont formées par évidement de la surface supérieure de la plaque de moulage inférieure (31) vers la direction de la surface inférieure (313) de la plaque de moulage inférieure (31), et par rainurage d'une surface latérale (312) de la plaque de moulage inférieure (31), et chacune de la pluralité de rainures (319) correspondantes présente une pluralité de surfaces d'étalonnage (3193) faisant saillie vers l'intérieur.

7. Dispositif de moulage (100) selon la revendication 6, dans lequel au moins deux parois latérales de la cavité de formation (331) présentent respectivement une pluralité de surfaces de support (3315) faisant saillie vers le centre de celles-ci, et la pluralité de surfaces de support (3315) et la pluralité de surfaces d'étalonnage (3193) de la pluralité de rainures (319) correspondantes se situent à une même hauteur verticale.

8. Procédé de moulage (300), comprenant :
la fourniture d'un ensemble de moulage inférieur (30) incluant une pluralité de trous de positionnement (315), une pluralité de rainures (319) correspondantes et au moins une cavité de formation (331), dans lequel chacune de la pluralité de rainures (319) correspondantes présente une pluralité de surfaces d'étalonnage (3193) faisant saillie vers l'intérieur, au moins deux parois latérales de la cavité de formation (331) présentent respectivement une pluralité de surfaces de support (3315) faisant saillie vers le centre de celle-ci, la pluralité de surfaces de support (3315) et la pluralité de surfaces d'étalonnage (3193) de la rainure (319) correspondante se trouvent à la même hauteur verticale ;
la disposition d'un matériau de moulage (M) sur la pluralité de surfaces de support (3315) de l'au moins une cavité de formation (331) et la disposition d'une pluralité de matériaux en verre d'étalonnage respectivement sur la pluralité de surfaces d'étalonnage (3193) ;
la fourniture d'un ensemble de moulage supérieur (10) incluant une plaque de moulage supérieure (11) et une pluralité de colonnes de positionnement (15) disposées sur celle-ci, dans lequel au moins un noyau de moule (13) et une pluralité de colonnes (19) correspondantes entourant l'au moins un noyau de moule (13) sont disposés du même côté de la plaque de moulage supérieure (11) ; dans lequel chacune de la pluralité de colonnes de positionnement (15) de l'ensemble de moulage supérieur (10) est disposée en correspondance avec chacun de la pluralité de trous de positionnement (315), chacune de la pluralité de colonnes (19) correspondantes est disposée en correspondance avec chacune de la pluralité de rainures de (319) correspondantes, et l'au moins un noyau de moule (13) de l'ensemble de moulage supérieur (10) correspond à l'au moins une cavité de formation (331) de l'ensemble de moulage inférieur (30) ;
le chauffage de l'ensemble de moulage supérieur (10) et de l'ensemble de moulage inférieur (30) ;
l'évacuation de l'ensemble de moulage inférieur (30) à travers la pluralité de trous de positionnement (315) de façon que l'ensemble de moulage supérieur (10) se déplace progressivement vers le bas ;
la compression de l'ensemble de moulage supérieur (10) et de l'ensemble de moulage inférieur (30) ;
dans lequel un article est formé en faisant correspondre l'au moins un noyau de moule (13) et la cavité de formation (331).

9. Procédé de moulage selon la revendication 8, dans lequel l'au moins un noyau de moule (13) présente une première surface de formation prédéterminée, l'au moins une cavité de formation (331) présente une seconde surface de formation prédéterminée, et les deux surfaces opposées de l'article présentent les mêmes profils que la première surface de formation prédéterminée et la seconde surface de formation prédéterminée, respectivement.
